# EUROPÄISCHE PATENTSCHRIFT

(11) **EP 1 469 289 B1**
(45) Veröffentlichungstag und Bekanntmachung des Hinweises auf die Patenterteilung: **20.04.2016**
(21) Anmeldenummer: 04016282.8
(22) Anmeldetag: 09.07.2003
(51) Int. Cl.: G01G 13/16, B65D 88/70, B65D 88/32, G01G 13/02, B65D 88/66, B65D 88/62

(54) **Dosieranlage für Pulverpigmente**
Metering device for powdery pigments
Dispositif de dosage pour pigments pulvérulants

(30) Priorität: 15.07.2002 DE 10231813
(43) Veröffentlichungstag der Anmeldung: 20.10.2004
(62) Teilanmeldung aus: 03015426.4
(73) Patentinhaber: Finke, Michael, 32791 Lage (DE); Finke, Ingo, 31791 Lage (DE)
(72) Erfinder: Finke, Michael, 32791 Lage (DE); Finke, Ingo, 31791 Lage (DE)
(74) Vertreter: Sparing Röhl Henseler

(56) Entgegenhaltungen:
- EP-A- 0 866 000
- DE-C- 19 639 740
- GB-A- 1 322 968
- US-A- 4 345 858
- US-A- 4 488 837
- US-A- 4 775 267
- US-B1- 6 287 056

## Beschreibung

Die Erfindung betrifft eine Dosieranlage für Pulverpigmente nach dem Anspruch 1.

Aus US 4 488 837 A ist eine Dosieranlage mit den Merkmalen des Oberbegriffs des Anspruchs 1 bekannt.

In US 4 775 267 A wird ein pneumatischer Pulverförderer beschrieben. US 4 345 858 A beschreibt eine Anlage mit mehreren Behältern zum Abgeben von Inhaltsstoffen, die jeweils einem Wägebehälter zugeführt werden. Aus GB 1 322 968 A ist ein Pulverbeschichtungsverfahren bekannt, bei dem Pulver aus einem Trichter zugeführt wird. In US 6 287 056 B1 wird der Transport eines Feststoffs durch Gaspulse beschrieben. Aus EP 0 866 000 A1 geht das Entleeren eines Behälters durch eine pulsierende Luftströmung hervor. DE 196 39 740 C1 offenbart eine Dosiervorrichtung für Schüttgüter.

Pulverpigmente wie solche aus Eisenoxid, Titandioxid oder Chromoxid werden einzeln oder gemischt zur Einfärbung verschiedenster Materialien wie beispielsweise Holz, Lacke, Lebensmittel, Betonwaren, Dachsteine, Verbundsteine etc. verwendet. Sie werden üblicherweise als Sackware zu ca. 25 kg oder in sogenannten Big-Bags von 1 t von verschiedenen Herstellem beim Endverbraucher angeliefert.

Das automatische chargenweise Abwiegen und Fördern derartiger Pulverpigmente ist jedoch aufgrund der starken Brückenbildung in Behältern und Leitungen problematisch. Deshalb werden Pulverpigmente auch häufig unter Zuhilfenahme eines organischen oder anorganischen Bindemittels in eine granulatartige Konsistenz überführt, die eine gute Fließfähigkeit und Dosierbarkeit besitzt. Diese zusätzliche Behandlung ist jedoch aufwendig und verteuert das Produkt wesentlich.

Aufgabe der Erfindung ist es, eine Dosieranlage nach dem Oberbegriff des Anspruchs 1 zu schaffen, die es ermöglicht, Pulverpigmente als solche zu verwenden.

Diese Aufgabe wird entsprechend dem kennzeichnenden Teil des Anspruchs 1 gelöst.

Dadurch, daß eine Dosieranlage mit einer Fördereinrichtung verwendet wird, die einen trichterförmigen, mit Druckluft beaufschlagbaren, bodenseitig mit einem Verschluß sowie mit einem seitlich gekrümmten Auslaßstutzen versehenen Druckbehälter aufweist, wobei sich axial in den Auslaßstutzen ein mit Druckluft beaufschlagbares Injektorrohr mit seitlichen Austrittsöffnungen für die Druckluft erstreckt, ist es möglich, durch eine Wägeeinrichtung abgewogenes Pulverpigment über eine größere Strecke auch aufwärts zu fördern.

Hierbei ist es zweckmäßig, wenn die Wägeeinrichtung einen Wiegebehälter mit einer flexiblen Innenauskleidung aufweist, wobei der Zwischenraum zwischen der Außenwandung des Behälters und der Innenauskleidung pulsierend druckluftbeaufschlagbar ist.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt schematisiert eine Frontansicht einer Dosieranlage für Pulverpigmente.
Fig. 2 zeigt schematisiert eine Wägeeinrichtung in Seitenansicht für die Dosieranlage von Fig. 1.
Fig. 3 zeigt schematisiert im Schnitt ausschnittweise die Wägeeinrichtung von Fig. 2.
Fig. 4 zeigt schematisiert die Wägeeinrichtung von Fig. 2 ausschnittweise und teilweise aufgeschnitten.
Fig. 5 zeigt schematisiert ausschnittweise und im Schnitt ein Injektorrohr für eine Förderleitung der Dosieranlage von Fig. 1.
Fig. 6 zeigt schematisiert ausschnittweise und im Schnitt einen Druckbehälter der Dosieranlage von Fig. 1.

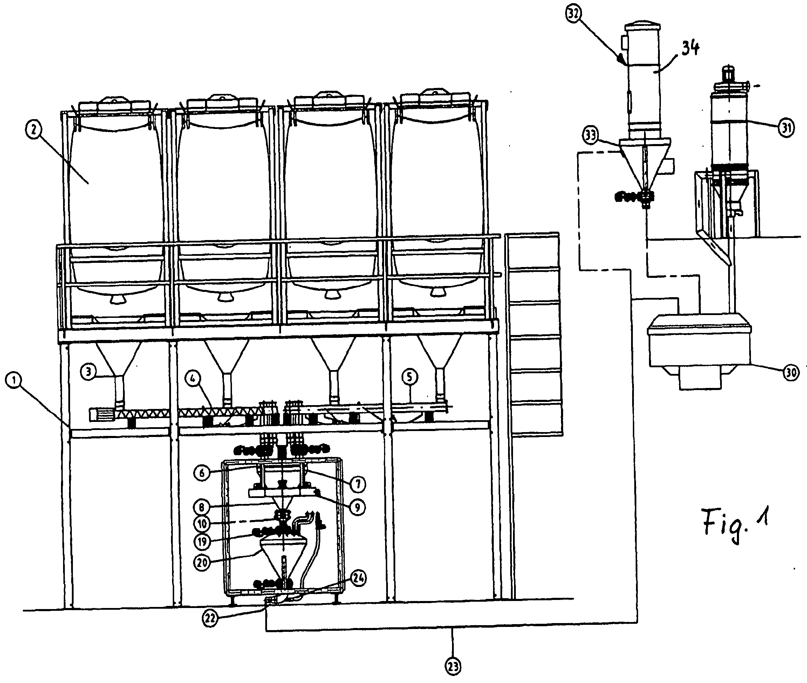

Die in Fig. 1 dargestellte Dosieranlage umfaßt eine Bühnenkonstruktion 1, in die oben mehrere, Pulverpigment enthaltende Big-Bags 2 einhängbar sind. Anstelle der Big-Bags 2 oder zusätzlich hierzu können auch Wechselcontainer, in die Pulverpigment in Form von Sackware entleert wird, vorgesehen sein. Die Big-Bags 2 oder Wechselcontainer werden mittels Kran oder Gabelstapler auf die Bühnen-Konstruktion 1 aufgesetzt. Beispielweise sind vier Big-Bags 2 und/oder Wechselcontainer für die vier Grundfarben vorgesehen, wobei durch entsprechendes Mischen die unterschiedlichsten Farbtöne herstellbar sind.

Unterhalb der Big-Bags 2 oder Wechselcontainer sind Einlauftrichter 3 vorgesehen, wobei die Wechselcontainer direkt über eine angebaute Entleerklappe und einen Stutzen in den zugehörigen Einlauftrichter 3 entteerbar sind, während die Big-Bags 2 über Vibrationsaustragsböden (nicht dargestellt) und den zugehörigen Einlauftrichter 3 entleerbar sind.

Von den jeweiligen Einlauftrichtern 3 gelangt das Pulverpigment zu einer zugehörigen Fördereinrichtung etwa in Form einer Förderschnecke 4 oder eines Vibrationsförderers 5, die dazu dienen, Pulverpigment über einen an ihrem Ende angeordneten, dünnen, flexiblen Schlauch 6 etwa aus Tuch, der als Staubfilter dient, in eine Wägeeinrichtung 7 zu fördern.

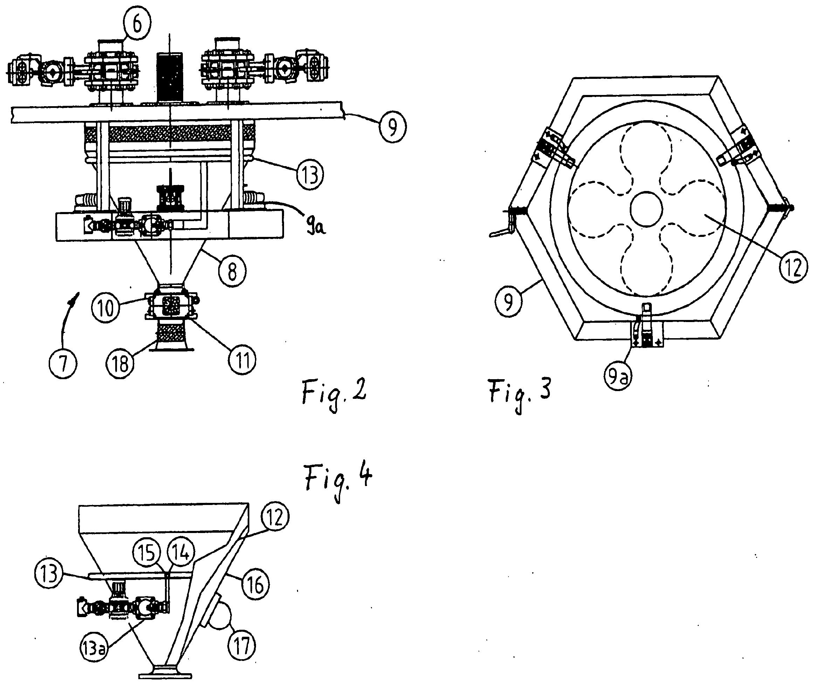

Die Wägeeinrichtung 7 umfaßt einen durch eine Verschlußklappe verschließbaren Wägebehälter 8, der im dargestellten Ausführungsbeispiel trichterförmig ausgebildet und in einem Rahmen 9 über Druckmeßdosen 9a bezüglich seines Gewichts abgetastet aufgehängt ist. Der Wägebehälter 8 besitzt einen bodenseitigen Auslaß 10, der über einen Verschluß 11, etwa eine Entleerklappe, entleerbar ist. Ferner ist der Wägebehälter 8 innenseitig mit einer flexiblen Innenauskleidung 12, vorzugsweise aus gummielastischem Material, versehen, die am oberen und unteren Ende der Innenwandung des Wägebehälters 8 angeklebt oder anvulkanisiert ist, während außenseitig zum Wägebehälter 8 eine Ringleitung 13 zur Druckluftzufuhr vorgesehen ist. Von der Ringleitung 13 führen mehrere Leitungen 14 zu Lufteinlaßdüsen 15 in der Wandung des Wägebehälters 8, über die Luft in den Zwischenraum 16 zwischen der Innenwandung des Wägebehälters 8 und der Innenauskleidung 12 eingeführt werden kann, so daß sich die Innenauskleidung 12 etwa wie in Fig. 3, 4 gezeigt unter Drucklufteinwirkung nach innen ausbeulen kann.

Die Druckluftzufuhr zur Ringleitung 13 ist mit einer Steuerung 13a versehen, die es ermöglicht, Luftstöße unterschiedlicher Länge und mit unterschiedlicher Taktung und gegebenenfalls unterschiedlichen Druck in dem Zwischenraum 16 zu erzeugen, wodurch die Innenauskleidung 12 entsprechend unterschiedlich und unterschiedlich weit nach innen ausgebeult wird. - Diesbezüglich hat sich beispielsweise ein Zyklus einer Länge von insgesamt etwa 20 sec bewährt, der drei Luftstöße einer Länge von 5 sec, 3 sec und 8 sec mit entsprechenden Pausen unter schneller Entlüftung umfaßt.

Der Wägebehälter 8 ist ferner mit einer auch gegen Überdruck ventilierten Austrittsöffnung (nicht dargestellt) versehen, um die durch die Luftstöße in den Zwischenraum 16 eingeführte Luft nach außen abzulassen.

Der Wägebehälter 8 kann zusätzlich mit einem an seiner Außenwandung angebauten Vibrator 17 versehen sein, um das Sammeln von Pulverpigment im unteren Teil des Wägebehälters 8 und sein Entleeren zu unterstützen.

Der Wägebehälter 8 wird nach Erreichen eines vorbestimmten Gewichts durch Aufnahme einer entsprechenden Menge an Pulverpigmenten zum Entleeren über die Lufteinlaßdüsen 15 entsprechend getaktet mit Druckluft beaufschlagt, wodurch die Innenauskleidung 12 wellenartig mehrfach nach innen bewegt wird. Außerdem ist es zweckmäßig, das Innere des Wägebehälters 8 beim Öffnen seines bodenseitigen Auslasses 10 von unten her mit einem Druckluftstoß zu beaufschlagen, um so zusätzlich vom Pulverpigment gebildete Brücken aufzubrechen. Zu diesem Zweck kann eine Lanze benutzt werden, es kann aber auch ein unter dem Wägebehälter 8 angeordneter mit einer Verschlußklappe 19 versehener Druckbehälter 20 mit Luftdruck beaufschlagt und zu Beginn des Entleerens zum Wägebehälter 8 hin geöffnet werden. Durch die pulsierende Bewegung der Innenauskleidung, gegebenenfalls unterstützt durch den Vibrator 17, kann der Wägebehälter 8 vollständig entleert werden. Gegebenenfalls können noch Luftdüsen vorgesehen sein, die die vollständige Entleerung unterstützen.

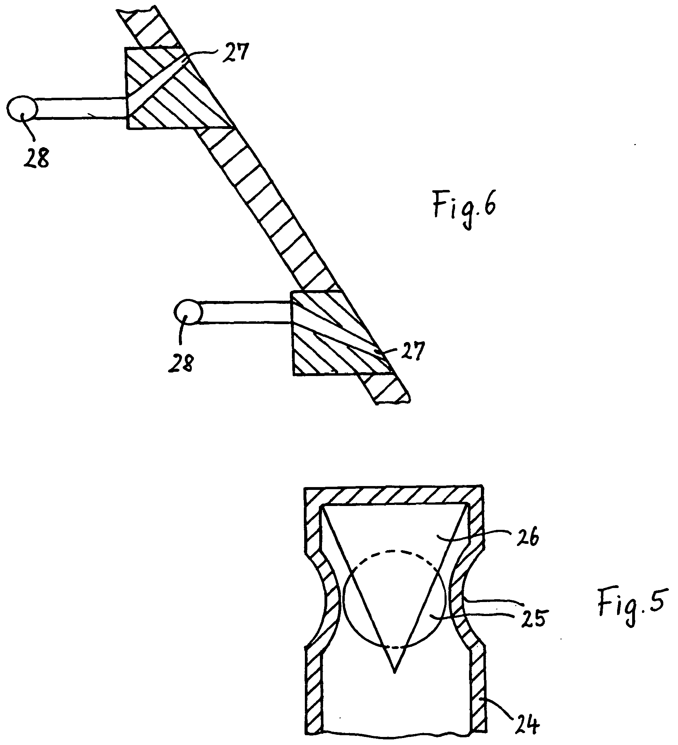

Der Wägebehälter 8 ist über einen dünnen flexiblen Schlauch 18 aus einem Tuch und mit einem unter dem Wägebehälter 8 angeordneten, trichterförmigen, eine Verschlußklappe 19 aufweisenden Druckbehälter 20 versehen. An diesen schließt sich ein durch einen Verschluß, etwa eine Entleerklappe oder einen Schieber, verschließbarer Auslaßstutzen 22 an, der seitlich gekrümmt und mit einer pneumatischen Förderleitung 23, etwa einem Förderschlauch, verbunden ist. Axial in den Auslaßstutzen 22 erstreckt sich in Richtung der Förderleitung 23 ein mit Druckluft beaufschlagbares Injektorrohr 24, das im Auslaßstutzen 22 ein geschlossenes Ende mit benachbart hierzu angeordneten seitlichen Austrittsöffnungen 25 aufweist, vgl. Fig. 5. Zweckmäßigerweise befindet sich benachbart zu den Austrittsöffnungen 25 ein Kegel 26 zum Leiten der austretenden Druckluft zu den Austrittsöffnungen 25.

Der Druckbehälter 20 ist mit einer Vielzahl von Lufteinblasdüsen 27 versehen, die beim dargestellten Ausführungsbeispiel in zwei übereinander angeordneten Reihen vorgesehen sind, wobei jede Reihe über eine entsprechende Ringleitung 28 gespeist wird, vgl. Fig. 6. Hierbei sind die Lufteinblasdüsen 27 der unteren Reihe nach unten und die der oberen Reihe nach oben gerichtet. Hierdurch kann einerseits ein entsprechender Luftdruck im Druckbehälter 20 ausgebildet werden, andererseits können hierdurch die Innenwände des Druckbehälters 20 von Resten von Pulverpigment freigeblasen und das Pigment aufgelockert werden. Zum pneumatischen Fördern der Pulverpigmente wird im allgemeinen über diesen im Druckbehälter 20 nur ein relativ geringer Druck von etwa 0,5 bis 1 bar aufgebaut. Das Injektorrohr 24 saugt und transportiert mit den hieraus austretenden Luftstrahlen das Pulverpigment aus dem Druckbehälter 20 durch die Förderleitung 23.

Der Druckbehälter 20 kann zusätzlich ebenso wie der Wägebehälter 8 in einem Gestell 29 angeordnet über Meßdosen bezüglich seines Gewichts abgetastet werden, um überprüfen zu können, ob er vollständig entleert wurde.

Die Förderleitung 23 kann direkt zu einem gegebenenfalls auch erhöht angeordneten Verbraucher 30, etwa einem Mischer für Beton od.dgl.

Gegebenenfalls kann die Förderleitung 23 auch zu einem gegebenenfalls erhöht angeordneten, siloartigen Zwischenspeicher 32 führen, von dem das Pulverpigment dann dem Verbraucher 30 zuführbar ist.

Der Zwischenspeicher 32 ist zweckmäßigerweise entsprechend dem Wägebehälter 8 ausgebildet und weist dann einen trichterförmigen, verschließbaren Speicherbehälter 33 mit einem bodenseitigen Auslaß auf, der an der Innenseite seiner Außenwandung eine flexible Innenauskleidung aufweist, wobei der Zwischenraum zwischen der Außenwandung und der Innenauskleidung pulsierend druckluftbeaufschlagbar ist. Da dies der Ausgestaltung des Wägebehätters 8 entspricht, ist dies nicht gezeichnet. Aufgesetzt auf den Speicherbehälter 33 ist ein Patronenfilter 34, um die Förderluft auszufiltern.

Die Fördereinrichtung mit dem Druckbehälter 20, dem Auslaßstutzen 22 und dem Injektorrohr 24 läßt sich auch mit einer anderen als der dargestellten und beschriebenen Wägeeinrichtung 7 verwenden. Ebenso lassen sich die Behälter 8, 33 im Zusammenhang mit anderen Fördereinrichtungen verwenden.

Die mit Pulverpigment in Berührung kommenden Teile, insbesondere die Innenwände bzw, Innenauskleidungen der Behälter 8, 20, 33 und die entsprechenden Flächen von deren Verschlüssen, aber auch die Fördereinrichtungen 4, 5 und die Förderleitung 23 sind zweckmäßigerweise mit einer Beschichtung aus einem zweikomponentigen Epoxidharz versehen, die das Anhaften von Partikeln der Pulverpigmente weitgehend vermeiden.

## Patentansprüche

1. Dosieranlage für Pulverpigmente, umfassend:
eine einen Wägebehälter (8) umfassende Wägeeinrichtung (7), eine erste Fördereinrichtung zum Aufgeben der Pulverpigmente in den Wägebehälter (8), eine eine pneumatische Förderleitung (23) und einen trichterförmigen, mit Druckluft beaufschlagbaren, bodenseitig mit einem Verschluß sowie mit einem seitlich gekrümmten Auslaßstutzen (22) versehenen Druckbehälter (20) umfassende pneumatische zweite Fördereinrichtung, einen Verbraucher (30), und gegebenenfalls einen Zwischenspeicher (32),
wobei der Wägebehälter (8) in die zweite Fördereinrichtung entleerbar ist und die Förderleitung (23), gegebenenfalls über den Zwischenspeicher (32), in den Verbraucher (30) führt, **dadurch gekennzeichnet, daß** dem Druckbehälter (20) der Wägebehälter (8) vorgeschaltet ist, der einen bodenseitigen Auslaß (10) für abgewogenes Pulverpigment aufweist und über einen Verschluß (11) entleerbar ist, und daß sich axial in den Auslaßstutzen (22) des Druckbehälters (20) in Richtung der Förderleitung (23) ein mit Druckluft beaufschlagbares Injektorrohr (24) mit seitlichen Austrittsöffnungen (25) für die Druckluft erstreckt.

2. Dosieranlage nach Anspruch 1, **dadurch gekennzeichnet, daß** der Druckbehälter (20) mit Lufteinblasdüsen (27) versehen ist.

3. Dosieranlage nach Anspruch 2, **dadurch gekennzeichnet, daß** die Lufteinblasdüsen (27) in mindestens einer umlaufenden Reihe angeordnet nach oben und unten gerichtet sind.

4. Dosieranlage nach einem der Ansprüche 1 bis 3, **dadurch gekennzeichnet, daß** der Druckbehälter (20) in einem Gestell (29) unter Abtastung durch Meßdosen zur Überwachung seines Gewichts abgestützt angeordnet ist.

5. Dosieranlage nach einem der Ansprüche 1 bis 4, **dadurch gekennzeichnet, daß** ein Wägebehälter (8) vorgesehen ist, der trichterförmig und verschließbar ausgebildet sowie mit seinem bodenseitigen Auslaß über dem Druckbehälter (20) angeordnet ist.

6. Dosieranlage nach Anspruch 5, **dadurch gekennzeichnet, daß** der Wägebehälter (8) an der Innenseite seiner Außenwandung eine flexible Innenauskleidung (12) aufweist, wobei der Zwischenraum (16) zwischen der Außenwandung und der Innenauskleidung (12) pulsierend druckluftbeaufschlagbar ist.

7. Dosieranlage nach Anspruch 6, **dadurch gekennzeichnet, daß** die Innenauskleidung (12) aus einem gummielastischen Material besteht.

8. Dosieranlage nach Anspruch 6 oder 7, **dadurch gekennzeichnet, daß** der Zwischenraum (16) mit unterschiedlichen Luftmengen und unterschiedlichen Taktungen mit Druckluft beaufschlagbar ist.

9. Dosieranlage nach einem der Ansprüche 6 bis 8, **dadurch gekennzeichnet, daß** in der Außenwandung des Wägebehälters (8) mehrere, längs des Umfangs verteilte Lufteinlaßdüsen (15) angeordnet sind.

10. Dosieranlage nach einem der Ansprüche 6 bis 9, **dadurch gekennzeichnet, daß** der Wägebehälter (8) nach Öffnen seines Auslasses (10) durch einen durch den Auslaß (10) eintretenden Luftstoß beaufschlagbar ist.

11. Dosieranlage nach einem der Ansprüche 5 bis 10, **dadurch gekennzeichnet, daß** der Wägebehälter (8) in einem Rahmen (9) unter Abtastung durch Meßdosen zur Überwachung seines Gewichts abgestützt angeordnet ist.

12. Dosieranlage nach einem der Ansprüche 5 bis 11, **dadurch gekennzeichnet, daß** der Wägebehälter (8) mit einem Vibrator (17) versehen ist.

13. Dosieranlage nach einem der Ansprüche 1 bis 12, **dadurch gekennzeichnet, daß** der Zwischenspeicher (32) einen trichterförmigen, verschließbaren Speicherbehälter (33) mit einem bodenseitigen Auslaß aufweist, der an der Innenseite seiner Außenwandung eine flexible Innenauskleidung aufweist, wobei der Zwischenraum zwischen der Außenwandung und der Innenauskleidung pulsierend druckluftbeaufschlagbar ist.

14. Dosieranlage nach Anspruch 13, **dadurch gekennzeichnet, daß** die Innenauskleidung aus einem gummielastischen Material besteht.

15. Dosieranlage nach Anspruch 13 oder 14, **dadurch gekennzeichnet, daß** der Zwischenraum mit unterschiedlichen Luftmengen und unterschiedlichen Taktungen mit Druckluft beaufschlagbar ist.

16. Dosieranlage nach einem der Ansprüche 13 bis 15, **dadurch gekennzeichnet, daß** in der Außenwandung mehrere, längs des Umfangs verteilte Lufteinlaßdüsen angeordnet sind.

17. Dosieranlage nach einem der Ansprüche 13 bis 16, **dadurch gekennzeichnet, daß** der Speicherbehälter (33) nach Öffnen seines Auslasses durch einen durch den Auslaß eintretenden Luftstoß beaufschlagbar ist.

18. Dosieranlage nach einem der Ansprüche 13 bis 17, **dadurch gekennzeichnet, daß** der Speicherbehälter (33) in einem Gestell unter Zwischenschaltung von Meßdosen zur Überwachung seines Gewichts abgestützt angeordnet ist.

19. Dosieranlage nach einem der Ansprüche 1 bis 18, **dadurch gekennzeichnet, daß** die Einrichtung zum Aufgeben der Pulverpigmente als Förderer Vibrationsförderer oder Förderschnecken aufweist.

20. Dosieranlage nach einem der Ansprüche 1 bis 19, **dadurch gekennzeichnet, daß** der Druckbehälter (20) und sein Auslaßstutzen (22) und gegebenenfalls die Innenauskleidung des Wägebehälters (8) und gegebenenfalls des Speicherbehälters (33) und gegebenenfalls die Förderer der Einrichtung zum Aufgeben der Pulverpigmente mit einer Beschichtung aus zweikomponentigem Epoxidharz versehen sind.

## Claims

1. Metering installation for powder pigments, including:
a weighing container (8) a comprehensive weighing arrangement (7), a first conveying unit for transferring the powder pigments into the weighing container (8), a pneumatic conveying conduit (23) and a funnel-shaped pressure container (20) with compressed air applied, fitted with a seal and a curved outlet connector (22) at the side; a comprehensive pneumatic second conveying unit, a consumer (30) and, if necessary, an intermediate store (32),
wherein the weighing container (8) can be emptied into the second conveying unit and the conveying conduit (23) leads into the consumer (30) via the intermediate store (32) if necessary, **characterised in that** the weighing container (8) is located upstream of the pressure container (20), the weighing container (8) having an outlet (10) for weighed powder pigment and can be emptied via a closure (11), and that an injector tube (24) fed with compressed air with exit openings (25) at the side for the compressed air extends axially into the outlet connector (22) of the pressure container (20) in the direction of the conveying conduit (23).

2. Metering installation according to claim 1, **characterised in that** the pressure container (20) is fitted with air-blow-in nozzles (27).

3. Metering installation according to claim 2, **characterised in that** the air-blow-in nozzles (27) are arranged in at least one circumferential series and said nozzles are directed upwards and downwards.

4. Metering installation according to one of the claims 1 to 3, **characterised in that** the pressure container (20) is supported/positioned in a framework (29), the said pressure container (20) being sensed by load cells for the monitoring of its weight.

5. Metering installation according to one of the claims 1 to 4, **characterised in that** a funnel-shaped weighing container (8) is provided, which can be closed off and is arranged with its floor outlet mounted above the pressure container (20).

6. Metering installation according to claim 5, **characterised in that** the weighing container (8) has a flexible inner lining (12) on the inner side of its outer wall, wherein the interspace (16) between the outer wall and the inner lining (12) can be pulsed by the application of compressed air.

7. Metering installation according to claim 6, **characterized in that** the inner lining (12) is made from a rubber-elastic material.

8. Metering installation according to claim 6 or 7, **characterised in that** the interspace (16) can have compressed air applied with different quantities and at different time intervals.

9. Metering installation according to one of the claims 6 to 8, **characterised in that** several air-inlet nozzles (15) are distributed along the circumference of the outer wall of the weighing container (8).

10. Metering installation according to one of the claims 6 to 9, **characterised in that** the weighing container (8) can be impacted by an incoming air blast through the outlet (10) after the outlet (10) has been opened.

11. Metering installation according to one of the claims 5 to 10, **characterised in that** the weighing container (8) is supported/positioned in a frame (9), the said container (8) being sensed by load cells for the monitoring of its weight.

12. Metering installation according to one of the claims 5 to 11, **characterised in that** the weighing container (8) is provided with a vibrator (17).

13. Metering installation accordingly to one of the claims 1 to 12, **characterised in that** the intermediate store (32) has a lockable storage hopper (33) with an outlet in the floor, the said hopper having an a flexible inner lining on the inner side of its outer wall, wherein the space between the outer wall and the inner cladding can be pulsed by the application of compressed air.

14. Metering installation according to claim 13, **characterised in that** the inner cladding is made of a rubber-elastic material

15. Metering installation according to claim 13 or 14, **characterised in that** the space can have compressed air applied with different quantities and at different time intervals.

16. Metering installation according to one of the claims 13 to 15, **characterised in that** several air inlet nozzles are distributed along the circumference of the outer wall.

17. Metering installation according to one of the claims 13 to 16, **characterised in that** the storage container (33) can be impacted by an incoming air blast through the outlet after the outlet has been opened.

18. Metering installation according to one of the claims 13 to 17, **characterised in that** the storage container (33) is positioned/supported in a frame, the said storage container (33) being sensed by load cells for the monitoring of its weight.

19. Metering installation according to one of the claims 1 to 18, **characterised in that** the device for dispensing the powder pigment is in the form of a vibrating conveyor or screw conveyor as transport means.

20. Metering installation according to one of the claims 1 to 19, **characterised in that** the pressure container (20) and its outlet connector (22) and, if necessary, the inner cladding of weighing container (8) and if necessary the storage container (33) and if necessary the conveyors of the equipment for dispensing the powder are provided with a coating of two-component epoxy resin.

## Revendications

1. Dispositif de dosage pour pigments pulvérulents comprenant:
un dispositif de pesage (7) comprenant un bac de pesage (8), un premier dispositif d'alimentation pour alimenter le bac de pesage (8) en pigments pulvérulents, un deuxième dispositif d'alimentation pneumatique comprenant un conduit d'alimentation pneumatique (23) et un réservoir sous pression (20) en forme de trémie alimentable par de l'air comprimé muni du côté du fond d'un obturateur et latéralement d'un manchon d'évacuation courbe (22), un dispositif utilisateur (30) et optionnellement un réservoir intermédiaire (32), dans lequel le bac de pesage (8) peut être vidé dans le deuxième dispositif d'alimentation et dans lequel le conduit d'alimentation (23) conduit au dispositif utilisateur (30),
optionnellement via le réservoir intermédiaire (32), **caractérisé en ce que** le bac de pesage (8) est placé en amont du réservoir sous pression (20), et présente une évacuation (10) du côté du fond pour les pigments pulvérulents pesés et peut être vidé via un obturateur (11) et **en ce qu'**un tube d'injection (24) alimentable par de l'air comprimé et muni d'ouvertures de sortie (25) pour l'air comprimé s'étend axialement dans le manchon d'évacuation courbe (22) du réservoir sous pression (20) en direction du conduit d'alimentation (23).

2. Dispositif de dosage selon la revendication 1, **caractérisé en ce que** le réservoir sous pression (20) est muni de buses de chargement pneumatique (27).

3. Dispositif de dosage selon la revendication 2, **caractérisé en ce que** les buses de chargement pneumatique (27) sont arrangées selon au moins une rangée circulaire orientée vers le haut et vers le bas.

4. Dispositif de dosage selon l'une des revendications 1 à 3, **caractérisé en ce que** le réservoir sous pression (20) est agencé pour être supporté dans un bâti (29) avec suivi de surveillance de son poids effectué par des boites dynamométriques.

5. Dispositif de dosage selon l'une des revendications 1 à 4, **caractérisé en ce qu'**il est prévu un bac de pesage (8) agencé en forme de trémie et pouvant être fermé et qui est agencé avec son évacuation du côté du fond via le réservoir sous pression (20).

6. Dispositif de dosage selon la revendication 5, **caractérisé en ce que** le bac de pesage (8) présente sur le côté intérieur de sa cloison externe un chemisage intérieur flexible (12), l'espace intermédiaire (16) entre la cloison externe et le revêtement intérieur (12) pouvant être sollicité pneumatiquement en vibration.

7. Dispositif de dosage selon la revendication 6, **caractérisé en ce que** le chemisage intérieur (12) est composé d'un matériau en gomme élastique.

8. Dispositif de dosage selon la revendication 6 ou 7, **caractérisé en ce que** l'espace intermédiaire (16) est alimentable avec des quantités d'air différentes et des cadences différentes par de l'air comprimé.

9. Dispositif de dosage selon l'une des revendications 6 à 8, **caractérisé en ce qu'**une pluralité de buses de chargement pneumatique (15) sont agencées de manière répartie le long de la périphérie de la paroi extérieure du bac de pesage (8).

10. Dispositif de dosage selon l'une des revendications 6 à 9, **caractérisé en ce que** le bac de pesage (8) peut être sollicité par un coup de souffle entrant par l'évacuation (10) après l'ouverture de son évacuation (10).

11. Dispositif de dosage selon l'une des revendications 5 à 10, **caractérisé en ce que** le bac de pesage (8) est agencé dans un cadre (9) avec suivi de surveillance de son poids effectué par des boites dynamométriques.

12. Dispositif de dosage selon l'une des revendications 5 à 11, **caractérisé en ce que** le bac de pesage (8) est muni d'un vibreur (17).

13. Dispositif de dosage selon l'une des revendications 1 à 12, **caractérisé en ce que** le réservoir intermédiaire (32) présente un bac intermédiaire (33) en forme de trémie qui peut être obturé et muni du côté du fond d'une évacuation, qui présente sur le côté intérieur de sa cloison externe un chemisage intérieur flexible , l'espace intermédiaire entre la cloison externe et le chemisage intérieur pouvant être sollicité pneumatiquement en vibration.

14. Dispositif de dosage selon la revendication 13, **caractérisé en ce que** le chemisage intérieur est composé d'un matériau en gomme élastique.

15. Dispositif de dosage selon la revendication 13 ou 14 **caractérisé en ce que** l'espace intermédiaire est alimentable avec des quantités d'air différentes et des cadences différentes par de l'air comprimé.

16. Dispositif de dosage selon l'une des revendications 13 à 15 **caractérisé en ce qu'**une pluralité de buses de chargement pneumatique est agencée de manière répartie le long de la périphérie de la paroi extérieure du bac de pesage.

17. Dispositif de dosage selon l'une des revendications 13 à 16, **caractérisé en ce que** le réservoir intermédiaire (33) peut être sollicité par un coup de souffle entrant par l'évacuation après l'ouverture de son évacuation.

18. Dispositif de dosage selon l'une des revendications 13 à 17, **caractérisé en ce que** le réservoir intermédiaire (33) est agencé dans un bâti dans lequel sont intercalés des boites dynamométriques pour la surveillance de son poids.

19. Dispositif de dosage selon l'une des revendications 1 à 18, **caractérisé en ce que** le dispositif pour alimenter les pigments pulvérulents présente un transporteur à vibrations ou un transporteur à vis sans fin.

20. Dispositif de dosage selon l'une des revendications 1 à 19, **caractérisé en ce que** le réservoir sous pression (20) et son manchon d'évacuation (22) et optionnellement le chemisage intérieur du bac de pesage (8) et optionnellement celui du réservoir intermédiaire (33) et optionnellement l'alimentation du dispositif pour alimenter les pigments pulvérulents sont munis d'un revêtement en résine époxyde à deux composants.
